# EUROPEAN PATENT APPLICATION

(11) **EP 0 834 674 A2**
(43) Date of publication of application: **08.04.1998**
(21) Application number: 97117165.7
(22) Date of filing: 02.10.1997
(51) Int. Cl.: F16F 13/26

(54) **Apparatus for mounting power units**

(30) Priority: 04.10.1996 JP 264391/96
(71) Applicant: TOYOTA JIDOSHA KABUSHIKI KAISHA, Aichi (JP)
(72) Inventor: Yamamoto, Katsuhiko, Toyota-shi, Aichi-ken 471 (JP)
(74) Representative: Pellmann, Hans-Bernd, Dipl.-Ing.

(57) **Abstract**

An apparatus for mounting a power unit (11) in an engine (12) compartment of a vehicle. The power unit (11) includes an engine (12) and a transmission (13) connected integrally to one another. An upper engine mounts (17, 18) are provided for mounting the power unit (11), wherein each upper engine mount (17, 18) has a rubber body (30A, 30B) for absorbing vibrations from the power unit (11). A lower engine mount (19) is provided for mounting the power unit (11), wherein the second mount (19) has a rubber body (30C) for absorbing vibrations from the power unit (11). Each rubber body (30A, 30B) is stretched by the power unit (11) while the rubber body (30C) is compressed by the power unit (11) when the power unit (11) is moved in a first direction with respect to the vehicle. The rubber body (30C) is stretched by the power unit (11) while each rubber body (30A, 30B) is compressed by the power unit (11) when the power unit (11) is moved with respect to the vehicle in a second direction that is opposite to the first direction.

## Description

**TECHNICAL FIELD** The present invention relates to an apparatus for mounting a power unit, which includes an automobile engine and a transmission integrally connected to each other, to vehicle bodies.

### RELATED BACKGROUND ART

Power units are normally supported in the engine compartments of automobiles by a plurality of engine mounts. Japanese Utility Model Publication No. 1-145821 desribes a typical engine mount. The engine mount has a first bracket, which is secured to a power unit, a second bracket, which is secured to a supporting member provided in the engine compartment, and a rubber insulator (elastic body) arranged between the brackets.

When the power unit is installed in the vehicle, its weight forces the first bracket to move toward the second bracket to compress the rubber insulator. In this state, vibrations of the power unit are absorbed by the rubber insulator. This prevents the vibrations from being transmitted to the supporting member.

When the vehicle travels along a bumpy road, the power unit swings and vibrates vertically with respect to the vehicle body. As the power unit moves downward with respect to the vehicle body, the first and second brackets are forced to move toward each other. On the other hand, as the power unit moves upward with respect to the vehicle body, the first and second brackets are forced to move away from each other. The rubber insulator effectively counters compressive force. However, the rubber insulator is ineffective for countering tensile force. Thus, a great tensile force that acts on the rubber insulator during a long upward displacement of the power unit forces the brackets to move far away from each other. This may damage the rubber insulator.

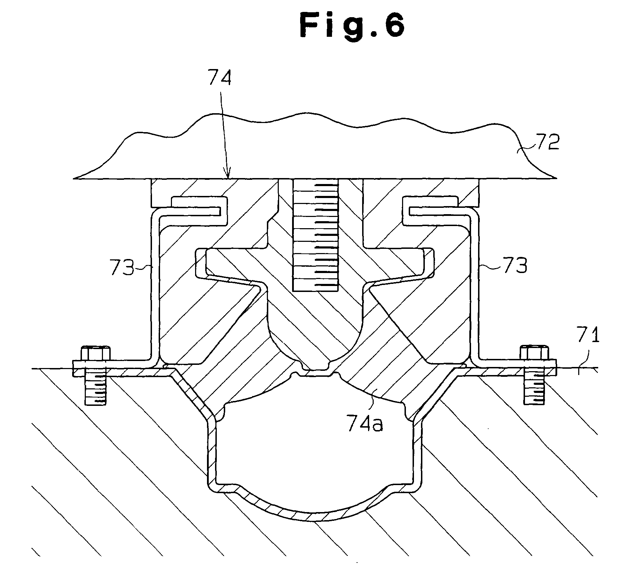

As shown in Fig. 6, in the prior art, to deal with such problems, a supporting member 71 is provided with stoppers 73 to restrict excesive vertical displacement of a power unit 72. The stoppers 73 prevent excesive tensile force from being applied to a rubber insulator 74a of the engine mount 74.

In this structure, the stoppers 73 are independent components and add to the number of assembled components. The additional stoppers 73 complicate the installation of the power unit 72. Furthermore, the restriction of the vertical displacement of the power unit 72 by the stoppers 73 hinders the absorption of the vibrations of the power unit 72. This may cause vibrations to be transmitted to the supporting member 71. Such vibrations may lead to noise and various other problems.

### DISCLOSURE OF THE INVENTION

Accordingly, it is an objective of the present invention to provide a power unit mounting apparatus that appropriately restricts excessive vertical displacement of the power unit without employing stoppers.

To achieve the above objective, the present invention provides an apparatus for mounting a power unit in an engine compartment of a vehicle, wherein the power unit includes an engine and a transmission connected integrally to one another. A first mount is provided for mounting the power unit, wherein the first mount has a first elastic member for absorbing vibrations from the power unit. A second mount is provided for mounting the power unit, wherein the second mount has a second member for absorbing vibrations from the power unit. The first elastic member is stretched by the power unit while the second elastic member is compressed by the power unit when the power unit is moved in a first direction with respect to the vehicle. The second elastic member is stretched by the power unit while the first elastic member is compressed by the power unit when the power unit is moved with respect to the vehicle in a second direction that is opposite to the first direction.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a diagrammatic front view showing a power unit mounting apparatus according to a preferred embodiment of the present invention;
Fig. 2(a) is a cross-sectional view showing an upper engine mount;
Fig. 2(b) is a cross-sectional view showing another upper engine mount;
Fig. 3 is a cross-sectional view showing a lower engine mount;
Fig. 4 is a graph showing the relationship between the vibration frequency and the attenuation coefficient;
Fig. 5 is a graph showing the relationship between the vibration frequency and the dynamic spring constant; and
Fig. 6 is a cross-sectional view showing the structure of a prior art engine mount provided with stoppers.

### DESCRIPTION OF SPECIAL EMBODIMENTS

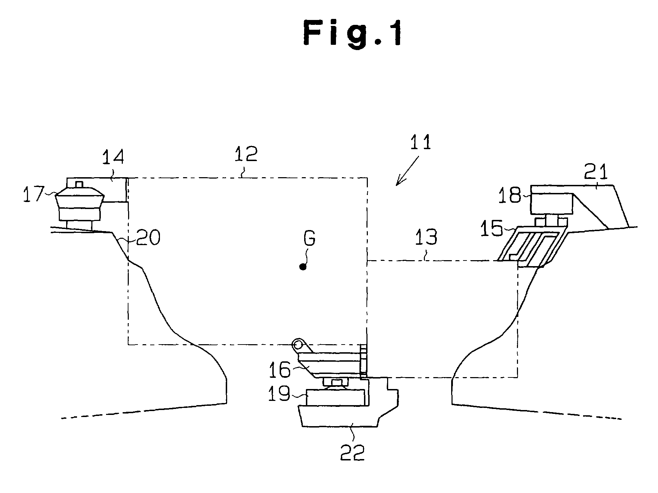

A preferred embodiment of a power unit mounting apparatus according to the present invention will now be described with reference to Figs. 1 to 5.

As shown in Fig. 1, a power unit 11 of an automobile includes an engine 12 and a transmission 13. As viewed in the drawing, an upper bracket 14 is secured to the upper left portion of the power unit 11, while an upper bracket 15 is secured to the upper right portion of the power unit 11. A lower bracket 16 is secured to the lower middle portion of the power unit 11.

Upper engine mounts 17, 18 are connected to the upper brackets 14, 15, respectively. A lower engine mount 19 is connected to the lower bracket 16. The engine mounts 17, 18 are connected to side members 20, 21, respectively. The engine mount 19 is connected to a center member 22. The power unit 11 is supported by the engine mounts 17, 18, 19 in the engine compartment. The center of gravity G of the power unit 11 is located between the engine mounts 17, 18, 19.

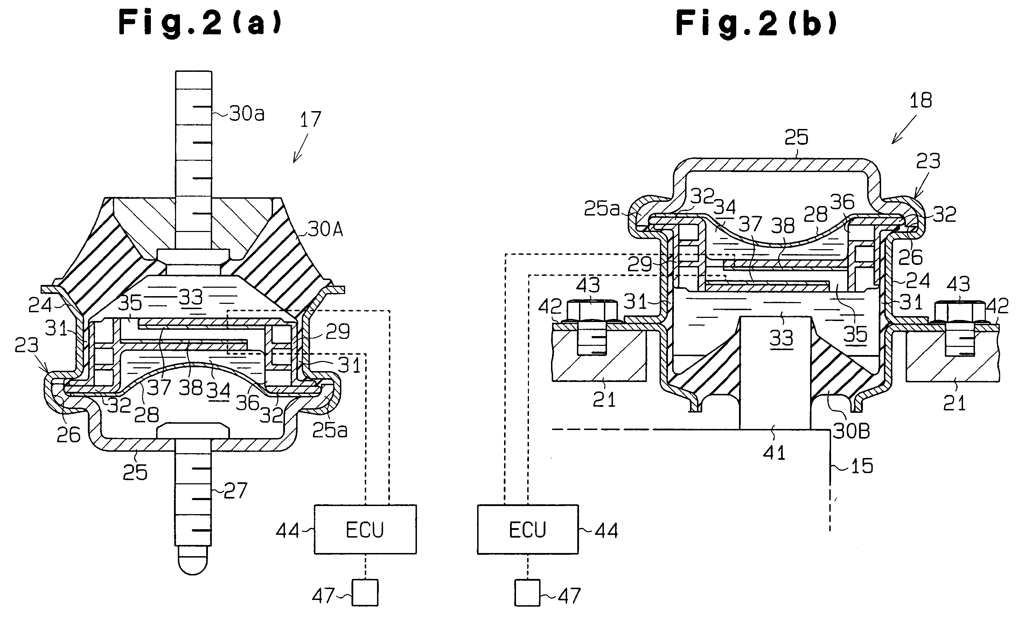

As shown in Fig. 2(a), the upper engine mount 17 includes a body case 23. The body case 23 is provided with a hollow cylinder 24 and a cover 25, which closes the lower end of the cylinder 24. A groove 26 extends circumferentially along the inner surface at the lower portion of the cylinder 24. A large diameter portion 25a provided at the upper portion of the cover 25 is fitted into the groove 26. The cover 25 is provided with a bolt 27 to fasten the upper engine mount 17 to the side member 20, as shown in Fig. 1.

A diaphragm 28 and a partition 29 are provided in the cylinder 24. The diaphragm 28 is sheet-like and is arranged in the large diameter portion 25a. The inner surface of the upper portion of the cylinder 24 is tapered so that the diameter becomes smaller at lower positions. The upper end of the cylinder 24 is closed by a rubber body 30A. The rubber body 30A abuts against the tapered inner surface of the upper portion of the cylinder 24. A seal 31 extends into the groove 26 from the bottom of the rubber body 30A. The rubber body 30A is provided with a bolt 30a for fastening the upper engine mount 17 to the upper bracket 14, as shown in Fig. 1.

A flange 32 extends radially at the lower end of the partition 29. The flange is fitted into the groove 26. The lower end of the seal 31 is located between the flange 32 and the wall of the groove 26. The rim of the diaphragm 28 is located between the flange 32 and the large diameter portion 25a of the cover 25. The partition 29 defines a main fluid chamber 33 and a sub fluid chamber 34 between the rubber body 30A and the diaphragm 28.

In the partition 29, a linear passage 35 and a helical passage 36 each connect the fluid chambers 33, 34 with each other. The linear passage 35 extends horizontally while the helical passage 36 extends vertically in a helical manner. The length of the helical passage 36 is longer than that of the linear passage 36. A pair of parallel electrodes 37, 38 are arranged in the linear passage 35 extending in the same direction as the passage 35. An electroviscous fluid is contained in the main fluid chamber 33, the sub fluid chamber 34, the linear passage 35, and the helical passage 36. The viscosity of the electroviscous fluid increases when voltage is applied to the fluid.

Under normal circumstances, the weight of the power unit 11 acts downward on the rubber body 30A and compresses the rubber body 30A in the upper engine mount 17. When the power unit 11 vibrates vertically with respect to the vehicle body, the rubber body 30A is periodically compressed and stretched vertically. This deforms the rubber body 30A and changes the volume of the main fluid chamber 33. Changes in the volume of the main fluid chamber 33 cause the electroviscous fluid to move between the main fluid chamber 33 and the sub fluid chamber 34 through the linear passage 35 and the helical passage 36.

As shown in Fig. 2(b), the structure of the other upper engine mount 18 is basically the same as the upper engine mount 17, however, it is upside down. The upper engine mount 18 includes a rubber body 30B, which is provided with a pin 41 projecting downward instead of the bolt 30a. The pin 41 is secured to the upper bracket 15. The rubber body 30B further includes a seal 31 extending upward into the groove 26.

A fastening flange 42 extends radially from the cylinder 24 of the upper engine mount 18. The fastening flange 42 is fastened to the side member 21 by bolts 43.

In the same manner as the upper engine mount 17, under normal circumstances, the weight of the power unit 11 acts downward on the rubber body 30B and compresses the rubber body 30B in the upper engine mount 18. When the power unit 11 vibrates vertically with respect to the vehicle body, the rubber body 30B is periodically compressed and stretched vertically. This deforms the rubber body 30B and changes the volume of the main fluid chamber 33. Changes in the volume of the main fluid chamber 33 cause the electroviscous fluid to move between the main fluid chamber 33 and the sub fluid chamber 34 through the linear passage 35 and the helical passage 36.

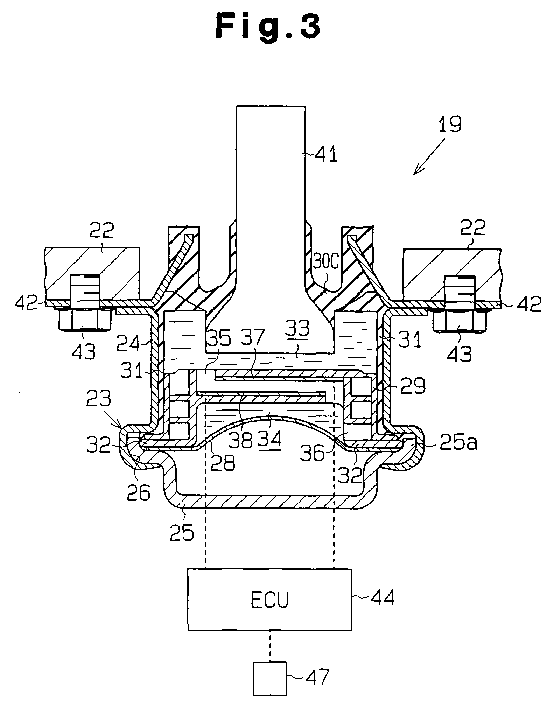

As shown in Fig. 3, the lower engine mount 19 is oriented in the same manner as the upper engine mount 17. The structure of the lower engine mount 19 is basically the same as the upper engine mounts 17, 18. However, in the lower engine mount 19, the inner surface of the upper portion of the cylinder 24 is tapered so that its diameter becomes smaller at upper positions. The rubber body 30C abuts against the inner surface of the upper portion of the cylinder 24. A pin 41 projecting upward from the rubber body 30C is secured to the lower bracket 16. Like the upper engine mount 18, the cylinder 24 is provided with a fastening flange 42. The fastening flange 42 is fastened to the center member 22 by bolts 43.

In the same manner as the upper engine mounts 17 and 18, under normal circumstances, the weight of the power unit 11 acts downward on the rubber body 30C and vertically stretches the rubber body 30C in the lower engine mount 19. When the power unit 11 vibrates vertically with respect to the vehicle body, the rubber body 30C is periodically stretched and compressed vertically. This deforms the rubber body 30C and changes the volume of the main fluid chamber 33. Changes in the volume of the main fluid chamber 33 causes the electroviscous fluid to move between the main fluid chamber 33 and the sub fluid chamber 34 through the linear passage 35 and the helical passage 36.

As described above, the downward displacement of the power unit 11 during vibration causes the rubber bodies 30A, 30B of the associated engine mounts 17, 18 to be compressed while causing the rubber body 30C of the lower engine mount 19 to be stretched. The distance between the upper engine mounts 17, 18 and the lower engine mount 19 is set at a value that allows the rubber body 30C of the lower engine mount 19 to withstand stretching without breaking, even when the upper rubber bodies 30A, 30B are fully compressed.

When the power unit 11 is displaced upward, the rubber bodies 30A, 30B of the associated engine mounts 17, 18 are stretched vertically while the rubber body 30C of the lower engine mount 19 is compressed vertically. The distance between the upper engine mounts 17, 18 and the lower engine mount 19 is set at a value that allows the rubber bodies 30A, 30B of the associated upper engine mounts 17, 18 to withstand stretching without breaking, even when the lower rubber body 30C is fully compressed.

As shown in Figs. 2(a), 2(b), and 3, the electrodes 37, 38 of the engine mounts 17, 18, 19 are each electrically connected to an electronic control unit (ECU) 44. The ECU 44 applies voltage to the electroviscous fluid in the linear passage 35 with the electrodes 37, 38. Application of voltage to the electrodes 37, 38 increases the viscosity of the electroviscous fluid in the linear passage 35. This prevents the electroviscous fluid in the main fluid chamber 33 and the sub fluid chamber 34 from passing through the linear passage 35. As a result, the electroviscous fluid moves between the main fluid chamber 33 and the sub fluid chamber 34 through the helical passage 36.

A vibration sensor 47 is connected to the ECU 44. The vibration sensor 47 detects the vertical vibration frequency of the power unit 11 and sends a signal corresponding to the detected value to the ECU 44. The ECU 44 duty controls the application of voltage to the electrodes 37, 38 in accordance with the signals from the vibration sensor 47. This alters the attenuation coefficient C and the dynamic spring constant Kd of each engine mount 17, 18, 19. The ECU 44 sets the attenuation coefficient C and the dynamic spring constant Kd at a value optimally corresponding to the vertical vibration frequency.

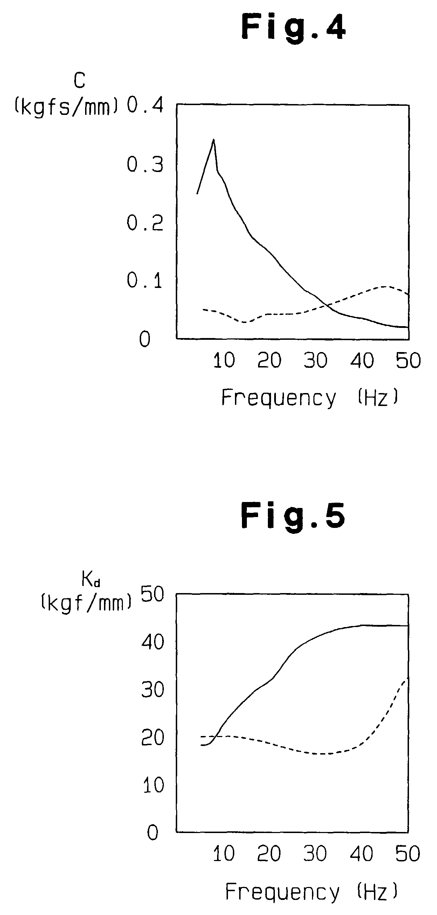

When voltage is not applied to the electrodes 37, 38, the electroviscous fluid moves between the fluid chambers 33, 34 through both the linear passage 35 and the helical passage 36. In such state, the attenuation coefficient C and the dynamic spring constant Kd of the engine mounts 17, 18, 19 with respect to the vertical vibration frequency of the power unit 11 are as shown by the dotted lines in Figs. 4 and 5.

On the other hand, when voltage is applied to the electrodes 37, 38, the electroviscous fluid moves between the fluid chambers 33, 34 only through the helical passage 36. In such state, the attenuation coefficient C and the dynamic spring constant Kd of the engine mounts 17, 18, 19 with respect to the vertical vibration frequency of the power unit 11 are as shown by the solid lines in Figs. 4 and 5.

When there is little vibration of the power unit 11, or when the vehicle is traveling along normal roads, the weight of the power unit 11 is distributed between the rubber bodies 30A, 30B, 30C of the associated engine mounts 17, 18, 19. This decreases the share of the weight of the power unit 11 that acts on each rubber body 30A, 30B, 30C and enables the rubber bodies 30A, 30B, 30C to avoid great loads. Consequently, degradation in the elasticity of the rubber bodies 30A, 30B, 30C is minimized.

The power unit 11 vibrates vertically and with great magnitude when the automobile travels along bumpy roads. During the downward displacement of the power unit 11, the rubber bodies 30A, 30B of the upper engine mounts 17, 18 shown in Figs. 2(a) and 2(b) are both compressed. Hence, the rubber bodies 30A, 30B restrict the downward displacement of the power unit 11.

During the upward displacement of the power unit 11, the rubber body 30C of the lower engine mount 19 shown in Fig. 3 is compressed. Hence, the rubber body 30C restricts the upward displacement of the power unit. This structure restricts the upward displacement of the power unit 11 without using stoppers while absorbing vibrations. Since stoppers are not necessary, the structure for mounting the power unit 11 to the vehicle is simplified and the mounting of the power unit 11 to the vehicle is facilitated.

The ECU 44 controls the application of the application of voltage to the electrodes 37, 38 of the engine mounts 17, 18, 19 in accordance with the vibration frequency of the power unit 11. When controlling the electrodes 37, 38, the attenuation coefficient C and the dynamic spring constant Kd of each engine mount 17, 18, 19 is set so that the vibration frequency becomes small. Therefore, in this structure, the vertical displacement of the power unit 11 is restricted and the vibration of the power unit 11 is optimally controlled by the engine mounts 17, 18, 19.

Furthermore, the upper engine mounts 17, 18 and the lower engine mount 19 are arranged so that the center of gravity G of the power unit 11 is located between the mounts 17, 18, 19. This allows the engine mounts 17, 18, 19 to optimally control vibrations of the power unit 11 in vertical directions, horizontal directions, and other directions.

It should be apparent to those skilled in the art that the present invention may be embodied in many other specific forms without departing from the spirit or scope of the invention. Particularly, it should be understood that the present invention may be embodied in the forms described below.
(1) In the preferred and illustrated embodiment, the upward displacement of the power unit 11 is restricted by the rubber body 30C of the lower engine mount 19. However, the upward displacement of the power unit 11 may alternatively be restricted by the rubber bodies 30A, 30B of the associated upper engine mounts 17, 18. In this case, the upper engine mounts 17, 18 are constructed so that the rubber bodies 30A, 30B are compressed when the power unit 11 moves upward, and the lower engine mount 19 is constructed so that the rubber body 30C is compressed when the power unit 11 moves downward.
(2) The number of engine mounts having rubber bodies that are compressed by the upward movement of the power unit 11 (in the preferred and illustrated embodiment, the lower engine mount 19) may be changed if necessary. A greater number of such engine mounts more effectively restricts the upward displacement of the power unit 11. In the same manner, the number of engine mounts having rubber bodies that are compressed by the downward movement of the power unit 11 (in the preferred and illustrated embodiment, the upper engine mounts 17, 18) may be changed if necessary.
(3) The lower engine mount 19 may be slightly lowered from the position of the preferred and illustrated embodiment to a position at which the rubber body 30C does not receive the weight of the power unit when the power unit 11 is not vibrating or is just slightly vibrating. This further suppresses degradation of the elasticity of the rubber body 30C employed in the lower engine mount.
(4) The upper engine, mounts 17, 18 and the lower engine mount 19 need not be arranged so that the center of gravity G is located in between. For example, all of the engine mounts 17, 18, 19 may be arranged either above or below the center of gravity G. This increases the number of locations at which the engine mounts 17, 18, 19 may be secured to the power unit 11.
(5) In the preferred and illustrated embodiment, electroviscous fluid is contained in the engine mounts 17, 18, 19. However, engine mounts that do not contain electroviscous fluid may be employed to support the power unit 11. As another option, an engine mount that contains electroviscous fluid and an engine mount that does not contain electroviscous fluid may be employed together to support the power unit 11. The structure of engine mounts that do not contain electroviscous fluid is simplified since the partition 29, the diaphragm 28, and other parts are not necessary.
(6) The attenuation coefficient C and the dynamic spring constant Kd may be set in accordance with the velocity of the vehicle or the speed of the engine. In this case, a sensor that detects the vehicle velocity and a sensor that detects the engine speed are connected to the ECU 44.

Therefore, the present examples and embodiments are to be considered as illustrative and not restrictive and the invention is not to be limited to the details given herein, but may be modified within the scope and equivalence of the appended claims.

## Claims

An apparatus for mounting a power unit (11) in an engine (12) compartment of a vehicle. The power unit (11) includes an engine (12) and a transmission (13) connected integrally to one another. An upper engine mounts (17, 18) are provided for mounting the power unit (11), wherein each upper engine mount (17, 18) has a rubber body (30A, 30B) for absorbing vibrations from the power unit (11). A lower engine mount (19) is provided for mounting the power unit (11), wherein the second mount (19) has a rubber body (30C) for absorbing vibrations from the power unit (11). Each rubber body (30A, 30B) is stretched by the power unit (11) while the rubber body (30C) is compressed by the power unit (11) when the power unit (11) is moved in a first direction with respect to the vehicle. The rubber body (30C) is stretched by the power unit (11) while each rubber body (30A, 30B) is compressed by the power unit (11) when the power unit (11) is moved with respect to the vehicle in a second direction that is opposite to the first direction.

1. An apparatus for mounting a power unit (11) in an engine (12) compartment of a vehicle, wherein the power unit (11) includes an engine (12) and a transmission (13) connected integrally to one another, the apparatus comprising:
a first mount (17, 18) for mounting the power unit (11), wherein the first mount (17, 18) has a first elastic member (30A, 30B) for absorbing vibrations from the power unit (11), and
a second mount (19) for mounting the power unit (11), wherein the second mount (19) has a second member for absorbing vibrations from the power unit (11), the apparatus **characterized by that** the first elastic member (30A, 30B) is stretched by the power unit (11) while the second elastic member (30C) is compressed by the power unit (11) when the power unit (11) is moved in a first direction with respect to the vehicle, and
the second elastic member (30C) is stretched by the power unit (11) while the first elastic member (30A, 30B) is compressed by the power unit (11) when the power unit (11) is moved with respect to the vehicle in a second direction that is opposite to the first direction.

2. The apparatus according to claim 1, wherein further stretching of the first elastic member (30A, 30B) is restricted when the second elastic member (30C) is in a fully compressed state, and further stretching of the second elastic member (30C) is restricted when the first elastic member (30A, 30B) is in a fully compressed state.

3. The apparatus according to claim 1 or 2, wherein each mount supports the weight of the power unit (11) via its associated elastic member (30A, 30B, 30C).

4. The apparatus according to any one of claims 1 to 3, wherein the first mount (17, 18) is located at one of an upper and a lower side of the power unit (11), while the second mount (19) is located at the other aide.

5. The apparatus according to claim 4, wherein the first mount (17, 18) is located above the center of gravity of the power unit (11), while the second mount (19) is located below the center of gravity of the power unit (11).

6. The apparatus according to claim 5, wherein the first mount (17, 18) supports the power unit (11) on each of two members of the engine compartment, and the second mount (19) supports the power unit (11) midway of the side members.

7. The apparatus according to any one of claims 1 to 6, wherein each mount includes an adjuster for adjusting its vibration absorption characteristics.

8. The apparatus according to claim 7, wherein each adjuster includes a main chamber (33), a sub chamber (34), liquid having an electroviscous effect located in the main and sub chambers (33, 34), a passage means (35, 36) for connecting the main chamber (33) to the sub chamber (34), and a pair of electrodes (37, 38) for applying the voltage to the liquid, wherein the volume of each chamber (33, 34) is changed in response to the amount of deformation of the respective first and second elastic members (30A, 30B, 30C), and wherein the voltage is applied to the liquid via the electrodes (37, 38) to change the vibration absorption characteristics.

9. The apparatus according to claim 8, wherein the passage means includes a substantially straight passage (37) and a coiled passage (38).

10. The apparatus according to claims 8 or 9, further comprising a controller (44) for controlling the adjuster.
